# EUROPÄISCHE PATENTANMELDUNG

(11) **EP 0 756 952 A2**
(43) Veröffentlichungstag der Anmeldung: **05.02.1997**
(21) Anmeldenummer: 96107319.4
(22) Anmeldetag: 09.05.1996
(51) Int. Cl.: B60C 23/16, B60C 23/10

(54) **Vorrichtung und Verfahren zur Befüllung eines Luftreifens**

(30) Priorität: 29.07.1995 DE 19527894
(71) Anmelder: Dr.Ing.h.c. F. Porsche Aktiengesellschaft, D-70435 Stuttgart (DE)
(72) Erfinder: Marchart, Horst, 70374 Stuttgart (DE)

(57) **Zusammenfassung**

Mit der Vorrichtung und dem Verfahren wird erreicht, daß ein beschädigter Luftreifen des Fahrzeuges mit Notlaufeigenschaften versehbar ist, wobei dies mit einer Befüllungseinrichtung erfolgt, nach deren Herausnehmen aus einem Stauraum ein Signal ausgelöst wird, das den Fahrer ständig daran erinnert, das Fahrzeug nur im Rahmen vorgegebener Geschwindigkeiten zu bewegen. Mit dem Verfahren wird sichergestellt, daß unsachgemäße Handlungen, die in Verbindung mit dem Luftreifen mit Notlaufeigenschaften möglich wären, weitgehend vermieden werden.

## Beschreibung

Die Erfindung bezieht sich auf eine Vorrichtung und ein Verfahren zur Befüllung eines Luftreifens nach dem Oberbegriff der Patentansprüche 1 und 8.

Bei einem bekannten Personenwagen - z.B. Ferrari 355 GTS - wird eine Füllflasche an Bord mitgeführt, mit der ein Luftreifen mit einem außergewöhnlichen Druckverlust in einen Notlaufeigenschaften aufweisenden Zustand gebracht werden kann. Durch die Füllflasche die sowohl Dicht- als auch Druckmedium umfaßt, kann ein Ersatzrad entfallen. Allerdings hat dieser Vorteil jedoch auch eine Kehrseite: Der Fahrer erhält keine permanente Information darüber, daß er zum einen - aufgrund des Luftreifens mit Notlaufeigenschaften - nur mit deutlich reduzierter Geschwindigkeit fahren darf und zum anderen, daß der besagte Luftreifen durch einen voll funktionsfähigen Luftreifen zu ersetzen ist.

In der FR-PS 2 216 516 und EP-PS 0 022 258 A1 werden Füllflaschen für Luftreifen behandelt, die lediglich Druckmedium aufnehmen und abgeben und keine Beiträge zu den vorstehenden sicherheitsrelevanten Kriterien leisten.

Aufgabe der Erfindung ist es daher, eine Vorrichtung und ein Verfahren zu schaffen durch die einem defekten Luftreifen Notlaufeigenschaffen verliehen werden können und der Fahrer des Fahrzeuges nicht nur über diesen Zustand des Luftreifens informiert, sondern auch angehalten wird, ihn durch einen voll funktionsfähigen zu ersetzen.

Erfindungsgemäß wird diese Aufgabe durch die Merkmale der Patentansprüche 1 und 8 gelöst. Weitere, die Erfindung ausgestaltenden Merkmale sind in den jeweiligen Unteransprüchen enthalten.

Die mit der Erfindung hauptsächlich erzielten Vorteile sind darin zu sehen, daß durch die Befüllungseinrichtung ein Ersatzrad entfallen kann, wobei die durch eine Füllflasche - sie enthält Dicht- und Druckmedium - gebildete Befüllungseinrichtung an leicht lösbaren Haltevorrichtungen gehalten ist und mit einem elektrischen Schalter zusammenwirkt. Stellt der Fahrer einen außergewöhnlichen Druckverlust eines Luftreifens fest - durch Augenschein oder ein Reifendruckluftkontrollsystem - so nimmt er die Befüllungseinrichtung aus einem leicht zugänglichen Stauraum des Kraftfahrzeuges heraus. Nach dem Herausnehmen der Befüllungseinrichtung wird der elektrische Schalter derart geschaltet, daß ein visuelles oder ein auditives Signal erzeugt wird; das visuelle Signal kann durch eine Anzeige "90 km/h max" an einem Display an der Schalttafel erfolgen. Außerdem werden eine Sperrklinke einer Sperreinrichtung unter der Wirkung der Feder in den Stauraum eine Sperrposition einnehmen und die Kodierungseinrichtung aktiviert. Nach dem Befüllen des einen außergewöhnlichen Druckverlustes aufweisenden Luftreifens, ist der Fahrer aufgrund der Signale bzw. Anzeige, der Sperreinrichtung und der Kodierungseinrichtung gehalten, den lediglich mit Notlaufeigenschaften versehenen Luftreifen gegen einen voll funktionsfähigen alsbald auszutauschen. Die Sperreinrichtung und die Kodierungseinrichtung lassen sich mit vertretbarem Aufwand in ein Fahrzeug integrieren.

Bei Anwendung des Verfahrens zur Befüllung des Luftreifens wird sichergestellt, daß der Fahrer ständig über die herausgenommene Befüllungseinrichtung bzw. den Luftreifen mit Notlaufeigenschaffen informiert und gezielt auf die Erfordernisse besagten Luftreifens durch einen voll funktionsfähigen zu ersetzen hingewiesen wird.

In der Zeichnung sind Ausführungsbeispiele der Erfindung dargestellt, die nachstehend näher beschrieben sind:

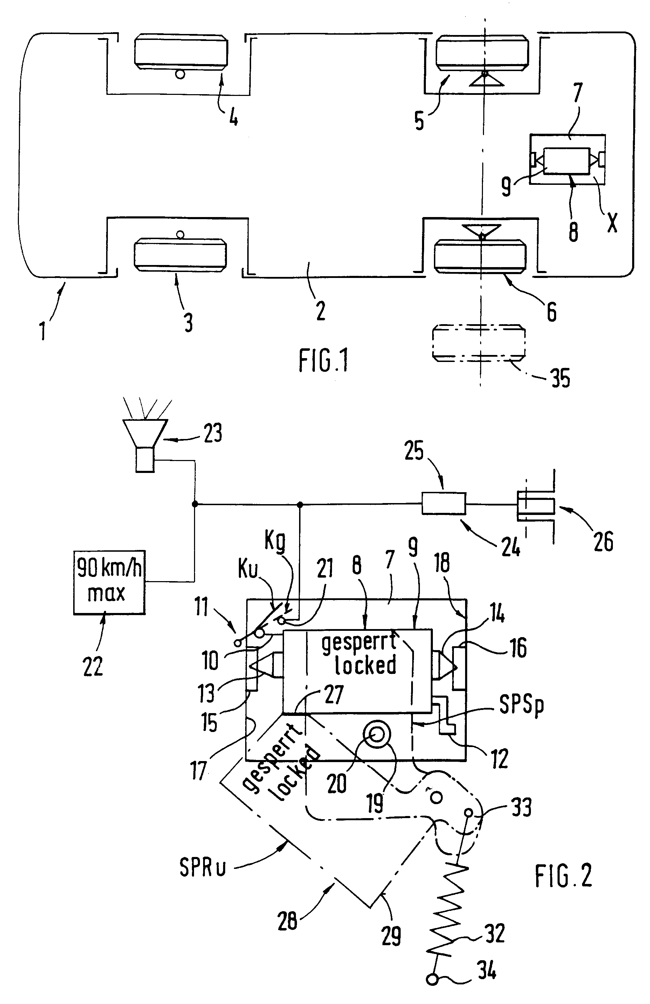

Es zeigt
- Fig. 1: eine schematische Ansicht von oben auf ein Fahrzeug,
- Fig. 2: eine Einzelheit X der Fig. 1 in größerem Maßstab und

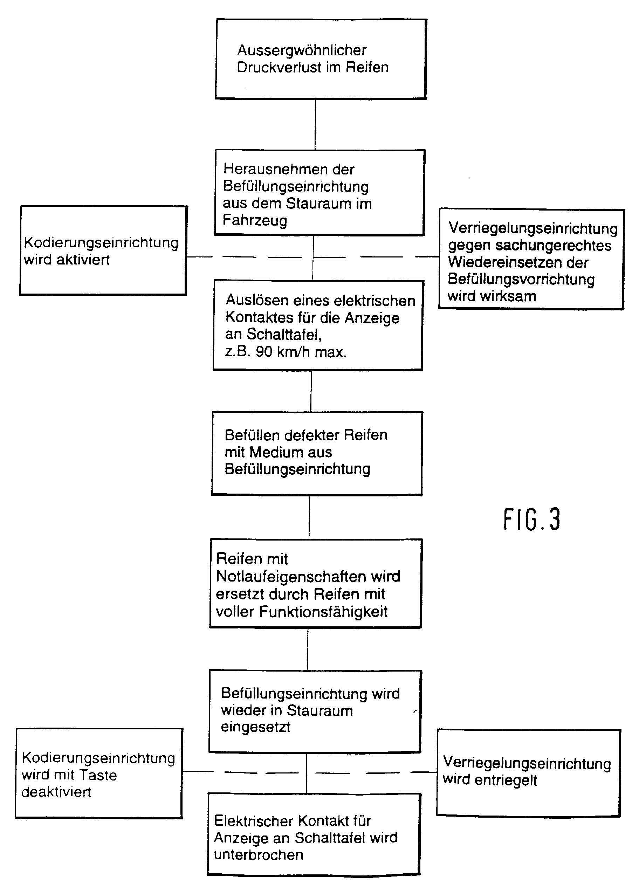

- Fig. 3: ein Ablaufdiagramm mit dem ein erfindungsgemäßes Verfahren im Zusammenhang erläutert wird.

Ein Kraftfahrzeug 1 umfaßt eine Bodenanlage 2, die von vier luftgefüllten Reifen 3 4, 5 und 6 getragen wird. Die Reifen 3, 4 sind lenkbaren Rädern zugeordnet; die Reifen 5, 6 sind nicht lenkbar.

Bei 7 ist ein Stauraum dargestellt, in dem eine Befüllungseinrichtung 8 untergebracht ist. Die Befüllungseinrichtung 8 ist eine Füllflasche 9 in der Dicht- und Druckmedium zur Befüllung eines Reifens z.B. 6 gespeichert sind, wobei die Befüllungseinrichtung 8 ein Stützelement 10 für einen elektrischen Schalter 11, ein Füllrohr 12 mit einem nicht gezeigten Ventil sowie Haltevorrichtungen 13, 14 aufweist, die leicht lösbar oder als Schnellverschlüsse ausgebildet sind und in Aufnahmen 15, 16 eingreifen. Die Aufnahmen 15, 16 sind an gegenüberliegenden Wandungen 17, 18 des Stauraumes 7 angeordnet. Zur lagerichtigen Ausrichtung der Befüllungseinrichtung 8 z.B. gegenüber dem elektrischen Schalter 11, dient ein an ihr angebrachter Fixierungsring 19 der einen fahrzeugfesten Zapfen 20 umgibt.

Der elektrische Schalter 11 umfaßt zwei Betriebsstellungen Ku und Kg: Ku bedeutet, Kontakt unterbrochen: Kg, Kontakt geschlossen. Der elektrische Schalter 11 kann auch in die Haltevorrichtungen 13, 14 bzw. Aufnahmen 15, 16 integriert sein, wobei im Ausführungsbeispiel ein Kontaktelement 21 von ihm an Verbraucher 22, 23, 24 angeschlossen ist.

Die Verbraucher 22, 23 erzeugen in Abhängigkeit der Stellung des Schalters 11 Signale: Verbraucher 22 gibt ein visuelles Signal, z.B. "90 km/h max" an einem nicht gezeigten Display einer Schalttafel des Fahrzeuges ab: Verbraucher 23 gibt ein auditives Signal, z.B. eine hörbare Weisung "Luftreifen prüfen".

Der Verbraucher 24 ist eine Kodierungseinrichtung 25, die mit einem Fingerschalter 26 - Taste, Druckknopf oder dergleichen - deaktivierbar ist.

An der Befüllungseinrichtung 8 stützt sich bei 27 eine federbelastete Sperreinrichtung 28 ab, die ein Sperrglied 29 umfaßt. Das Sperrglied 29 besitzt eine Sperrplatte 30 ein Schwenklager 31 und eine Zugfeder 32 die bei 33 am Sperrglied 29 und bei, 34 an einem fahrzeugfesten Abschnitt angreift. Die Sperrplatte trägt die Beschriftung "gesperrt, blocked".

Nach dem Herausnehmen der Befüllungseinrichtung 8 aus dem Stauraum 7 rückt das Sperrglied 29 aus der Stellung SPRu - Sperrglied in Ruhestellung - in die Stellung SPSp - Sperrglied in Sperrstellung - ein. Außerdem ist der Schalter 11 in der Stellung Kg wodurch die Verbraucher 22, 23, 24 aktiviert werden, d.h. sie erzeugen Signale und/oder speichern die Lageveränderung der Befüllungseinrichtung 8,

Für eine zufällige Nutzung der Befüllungseinrichtung 8 eignen sich folgende Verfahrensschritte:
- Nach Erkennen eines außergewöhnlichen Druckverlustes eines Lufreifens z.B. 6 wird die Befüllungseinrichtung 8 über die Haltevorrichtungen 13, 14 von den Aufnahmen 15, 16 gelöst und aus dem Stauraum 7 herausgenommen,
- durch das Herausnehmen der Befüllungseinrichtung 8 schaltet der elektrische Schalter 11 um und das visuelle und/oder auditive Signal wird ausgelöst,
- der defekte Reifen 6 mit der Befüllungseinrichtung 8 wird durch Einbringen von Dicht- und Druckmedium in einen Notlaufeigenschaften aufweisenden Zustand gebracht,
- der Lufreifen 6 mit Notlaufeigenschaften wird durch einen funktionsfähigen Luftreifen 35 ersetzt,
- die Befüllungseinrichtung 8 wird wieder mittels der Haltevorrichtungen 13, 14 und den Aufnahmen 15, 16 in den Stauraum 7 eingesetzt,
- der elektrische Schalter 11 unterbricht die Signale zu den Verbrauchern 22, 23, 24.

Nach dem Herausnehmen der Befüllungseinrichtung 8 wird die Sperreinrichtung 28 mit ihrem Sperrglied 29 selbsttätig - unter der Wirkung der Feder 32 - in den Stauraum 7 hineingeführt und/oder die Kodierungseinrichtung 25 wird aktiviert. Zum Wiedereinsetzen der Befüllungseinrichtung 8 ist das Sperrglied 28 in die entriegelte Ruhestellung SPRu manuell zu bewegen. Schließlich ist nach dem Wiedereinsetzen der Befüllungseinrichtung 8 die Kodierungseinrichtung 25 mit dem Fingerschalter 26 deaktivierbar, d.h. es kann danach durch autorisiertes Fachpersonal festgestellt werden, ob die Fingertaste betätigt wurde oder nicht.

## Patentansprüche

1. Vorrichtung zur Befüllung eines Luftreifens eines Fahrzeuges, insbesondere Kraftfahrzeuges, die eine Befüllungseinrichtung umfaßt, mit der bei einem außergewöhnlichen Druckverlust des Reifens in diesen Dicht- und Druckmedium einbringbar ist, dadurch gekennzeichnet, daß die Befüllungseinrichtung (8) in einem Stauraum (7) mittels Haltevorrichtungen (13, 14) an Aufnahmen (15,16) festgesetzt ist und mit einem elektrischen Schalter (11) zusammenwirkt, der nach dem Herausnehmen der Befüllungseinrichtung (8) aus dem Stauraum (7) ein visuelles und/oder auditives Signal auslöst.

2. Vorrichtung nach Anspruch 1, dadurch gekennzeichnet, daß die Haltevorrichtungen (13, 14) leicht lösbar sind und nach Art von Schnellverschlüssen mit den Aufnahmen (15, 16) des Stauraums (7) zusammenwirken.

3. Vorrichtung nach den Ansprüchen 1 und 2, wobei die Befüllungseinrichtung eine Füllflasche ist, dadurch gekennzeichnet, daß die Haltevorrichtungen (13, 14) zwischen Wandungen (17, 18) des Stauraumes (7) und der Füllflasche (9) vorgesehen sind.

4. Vorrichtung nach Anspruch 1, dadurch gekennzeichnet, daß das Signal eine Anzeige einer zulässigen Geschwindigkeit z.B. "90 km/h max." an einem Display einer Schalttafel des Kraftfahrzeuges anzeigt.

5. Vorrichtung nach Anspruch 1, dadurch gekennzeichnet, daß nach dem Herausnehmen der Befüllungseinrichtung (8) eine in den Stauraum (7) eingreifende Sperreinrichtung (28) wirksam wird.

6. Vorrichtung nach Anspruch 5, dadurch gekennzeichnet, daß die Sperreinrichtung (28) ein federbelastetes Sperrglied (29) umfaßt, das nach dem Herausnehmen der Befüllungseinrichtung (8) selbsttätig in den Stauraum (7) eingeführt wird.

7. Vorrichtung nach Anspruch 1, dadurch gekennzeichnet, daß mit dem elektrischen Schalter (11) eine Kodierungseinrichtung (25) aktiviert wird, die mit einem Fingerschalter (26) wie Taste, Druckknopf oder dergleichen deaktivierbar ist.

8. Verfahren zur Befüllung des Luftreifens nach einem oder mehreren der vorangehenden Ansprüche, dadurch gekennzeichnet, daß
- nach Erkennen eines außergewöhnlichen Druckverlust eines Luftreifens (z.B. 6) die Befüllungseinrichtung (8) über die Haltevorrichtungen (13, 14) von den Aufnahmen (15, 16) gelöst und aus dem Stauraum (7) herausgenommen wird;
- durch das Herausnehmen der Befüllungseinrichtung (8) der elektrische Schalter (11) umschaltet und das visuelle und/oder auditive Signal ausgelöst wird;
- der defekte Luftreifen (6) mit der Befüllungseinrichtung (8) durch Einbringen von Dicht- und Druckmedium in einen Notlaufeigenschaften aufweisenden Zustand gebracht wird;
- der Luftreifen (6) mit Notlaufeigenschaften durch einen voll funktionsfähigen Luftreifen (35) ersetzt wird;
- die Befüllungseinrichtung (8) wieder mittels der Haltevorrichtungen (13, 14) und den Aufnahmen (15, 16) in den Stauraum (7) eingesetzt wird;
- daß der elektrische Schalter (11) das Signal unterbricht.

9. Verfahren nach Anspruch 8, dadurch gekennzeichnet, daß nach dem Herausnehmen der Befüllungseinrichtung (8) die Sperreinrichtung (28) mit ihrem Sperrglied (29) selbsttätig in den Stauraum (7) eingreift und/oder die Kodierungseinrichtung (25) aktiviert wird.

10. Verfahren nach einem oder mehreren der vorangehenden Ansprüche, dadurch gekennzeichnet, daß zum Wiedereinsetzen der Befüllungseinrichtung (8) das Sperrglied (29) in eine entriegelte Ruhestellung (SPRu) zu bewegen ist.

11. Verfahren nach einem oder mehreren der vorangehenden Ansprüche, dadurch gekennzeichnet, daß nach dem Wiedereinsetzen der Befüllungseinrichtung (8) die Kodierungseinrichtung (25) mit dem Fingerschalter (26) deaktivierbar ist.
